Europäisches Patentamt

European Patent Office

Office européen des brevets

(11) Veröffentlichungsnummer: **0 469 521 B1**

(12) **EUROPÄISCHE PATENTSCHRIFT**

(45) Veröffentlichungstag der Patentschrift: **06.12.95**

(21) Anmeldenummer: **91112727.2**

(22) Anmeldetag: **29.07.91**

(51) Int. Cl.⁶: **C08L 27/06**, C08L 101/00,
//(C08L27/06,33:10,101:00),
(C08L101/00,27:06,33:10)

(54) **Fliessverbesserung bei der Verarbeitung von schlagzäh zu modifizierenden PVC-Blends.**

(30) Priorität: **08.11.90 DE 4035491**
**03.08.90 DE 4024690**

(43) Veröffentlichungstag der Anmeldung:
**05.02.92 Patentblatt 92/06**

(45) Bekanntmachung des Hinweises auf die
Patenterteilung:
**06.12.95 Patentblatt 95/49**

(84) Benannte Vertragsstaaten:
**AT BE CH DE DK ES FR GB IT LI NL SE**

(56) Entgegenhaltungen:
**EP-A- 0 058 979**
**EP-A- 0 138 121**
**DE-A- 3 542 469**
**FR-A- 2 167 677**

(73) Patentinhaber: **Röhm GmbH**
**Kirschenallee**
**D-64293 Darmstadt (DE)**

(72) Erfinder: **Fölsch, Karl Josef, Dr.**
**Backhaushol 19**
**W-6500 Mainz (DE)**
Erfinder: **Frank, Klaus**
**Ober-Ramstädter-Strasse 15a**
**W-6109 Mühltal (DE)**
Erfinder: **Jung, Karl-August, Dr.**
**Dresdner Strasse 14**
**W-6105 Ober-Ramstadt (DE)**

## Beschreibung

Gebiet der Erfindung

Die Erfindung betrifft die Fließverbesserung bei der Verarbeitung PVC-haltiger Massen auf Verarbeitungsmaschinen durch Polymere auf Alkylmethacrylat-Basis.

Stand der Technik

Während Weich-PVC durch den Gehalt an Weichmachern schon früh ein leicht verarbeitbarer Kunststoff war, stellten sich der thermoplastischen Verarbeitung von reinem, hochmolekularem PVC, insbesondere infolge seiner thermischen Instabilität und seinem rheologischen Verhalten, ausgeprägte Hemmnisse entgegen. Diese konnten durch Zusätze verschiedener Hilfsmittel überwunden werden, so daß ein verarbeitungsbereites PVC immer aus einem Gemisch von verschiedenen Komponenten besteht. Die Hauptaufgabe von Gleitmitteln, die neben weiteren Zusätzen als Verarbeitungshilfsmittel eingesetzt werden, ist die Fließverbesserung der hochviskosen PVC-Schmelze bei deren Verformung und Plastifizierung in den verschiedenen Verarbeitungsmaschinen. Gleitmittel bauen die Reibung der PVC-Teilchen in der Schmelze ab und verhindern damit das Entstehen erheblicher Friktionswärmen, so auch die durch Reibung zwischen der Oberfläche der Verarbeitungsmaschine und der Schmelze mögliche höhere Polymertemperatur. Dadurch werden PVC-Abbaureaktionen, die infolge mechanischer Schädigung durch Scherkräfte und durch Überhitzung ausgelöst werden können, vermieden oder doch deutlich vermindert.

Für die Verarbeitung von Hart-PVC zu Halbzeug und Fertigteilen werden hochpolymere Verarbeitungshilfsmittel auf der Grundlage von Polymethylmethacrylat (PMMA) eingesetzt, die neben einer Verkürzung des Plastifiziervorgangs vor allem eine Verbesserung der rheologischen Eigenschaften im thermoplastischen Zustand bewirken. Im Gegensatz zu anderen die Rheologie beeinflussenden Zusatzmitteln, wie die schon angesprochenen Weichmacher und Gleitmittel mit Molekulargewichten in g/mol von einigen Hundert bis etwa $10^3$, liegen die Molekulargewichte $\overline{M}w$ der hochpolymeren Verarbeitungshilfsmittel auf PMMA-Basis zwischen $1,2 \times 10^5$ und $2,5 \times 10^6$ g/mol (Kunststoff-Handbuch 2/1, Polyvinylchlorid, 2. Auflage, 1986, Carl Hanser, Verlag München, Wien, Seiten 595 bis 597).

Aus der DE-A 35 42 469 sind Formmassen auf der Basis von Vinylchloridpolymerisaten bekannt, bei denen man durch Zusatz von thermoplastischen Polymeren aus Styrol, α-Methylstyrol, p-Methylstyrol, Vinyltoluol, (Meth)Acrylnitril, Methylmethacrylat oder Mischungen daraus, und die eine Grenzviskosität von 2 bis 15 ml/g (gemessen in Dimethylformamid bei 25 Grad C) und einem Schwefelgehalt von 1,15 bis 3,95 Gew.-% aufweisen, die Gesamteigenschaften, insbesondere die Verarbeitungseigenschaften deutlich verbessern kann.

PVC läßt sich auch mit anderen Thermoplasten und Elastomeren zu modifiziertem PVC vermischen, wobei dann Mischungen, sogenannte Blends erhalten werden, die technisch wertvolle Eigenschaften haben, wie z.B. PVC-Kunststoffe mit erhöhter Schlagzähigkeit oder besserer Wärmeformbeständigkeit. Konstruktionswerkstoffe für z.B. Gehäuseherstellungen sind beispielsweise PVC/ABS-Blends, in denen die Schlagfestigkeit des PVC durch Zumischen des ABS-Kautschuks wesentlich verbessert ist wie beispielsweise aus FR-A 2.167.677 bekannt. Dort sind weiterhin Methylmethacrylat - Polymerisate als Zuschlag-Stoffe genannt, deren Molekulargewichte im Bereich zwischen etwa 50 000 und 115 000 gmol$^{-1}$ liegen. PVC und ABS sind zwei unverträgliche Polymere, d.h. Mischungen dieser beiden Polymeren sind zweiphasig. Bei der maschinellen Verarbeitung von PVC-ABS-Mischungen, z.B. dem Spritzguß größerer Teile, treten infolge der Unverträglichkeit der beiden Polymerarten große, makroskopische Inhomogenitätsbereiche auf, die eine hohe Ausschußquote des verarbeiteten Polymerblends bedingen. Die Inhomogenitäten sind als Schlieren, Aufschieferungen, Schuppen, Trennungen in verschiedene farbliche Bereiche in den verarbeiteten Teilen sichtbar. Diese Spritzgußartikel-Inhomogenitäten werden auf Inhomogenitäten beim Fließen des Schmelzgemisches in der Verarbeitungsmaschine zurückgeführt.

Aufgabe und Lösung

Es bestand daher die Aufgabe, Mischungen von PVC und anderen thermoplastisch verarbeitbaren Polymeren wie z.B. PVC/ABS-Mischungen, die maschinell zu unverträglichen Blends verarbeitet werden, wie z.B. zu PVC/ABS-Blends, so zu präparieren, daß bei deren Verarbeitung der Erhalt gefertigter Teile ohne makroskopische Inhomogenitätsbereiche gesichert ist.

Es wurde gefunden, daß mit Polymeren auf Alkylmethacrylat-Basis, die insbesondere Copolymere des Methylmethacrylats sind und Molekulargewichte $\overline{M}w$ im Bereich von 2 000 bis ≦ 20 000 haben, die maschinelle Verarbeitung von PVC-haltigen, unverträglichen Polymermischungen zu entsprechenden Kunststoff-Blend-Artikeln ohne makroskopische Inhomogenitätsbereiche sicher durchgeführt werden kann.

Die Erfindung betrifft:

Verfahren zur maschinellen Verarbeitung von PVC-haltigen, unverträglichen Polymermischungen zu Kunststoff-Blend-Artikeln,

dadurch gekennzeichnet,

daß den Polymermischungen zur maschinellen Verarbeitung $C_1$-$C_8$-Alkylmethacrylat-Copolymere mit Mole-kulargewichten $\overline{M}w$ in g/mol im Bereich von 2 000 bis ≦ 20 000 zugesetzt sind.

Vorteilhaft liegt das Molekulargewicht $\overline{M}w$ der erfindungsgemäßen Rheologieverbesserer auf Alkylmethacrylatpolymerisat-Basis im Bereich von 2 000 bis 15 000, vor allem im Bereich von 2 000 bis 10 000. Diese Rheologieverbesserer, auch als Fließverbesserer zu bezeichnen, sind Methylmethacrylat-Copolymerisate, die aus 50 - 98 Gew.-% Methylmethacrylat, 2 bis 50 Gew.-% Alkylmethacrylsäureestern mit 2 bis 8 Kohlenstoffatomen im Alkylrest und 0 bis 48 Gew.-% anderer Comonomerer aufgebaut sind. Die erfindungsgemäße Verarbeitung der Polymermischungen wird vor allem auf Spritzgußmaschinen durchgeführt und hat insbesondere Bedeutung für die Verarbeitung von PVC/ABS-Mischungen, mit 30 bis 70 Gew.-% ABS-Anteilen bezogen auf die Summe der PVC-ABS-Anteile, zu schlagzähmodifizierten PVC-Blends, die beispielsweise als Chassis-Teile, wie z.B. für Computergehäuse, Verwendung finden.

Das Ergebnis der Erfindung ist überraschend. Während bei der thermoplastischen Verarbeitung von Hart-PVC zu Halbzeug und Fertigteilen hochpolymere Verarbeitungsmittel auf der Grundlage von Polymethylmethacrylat und mit Molekulargewichten von $1,2 \times 10^5$ bis $2,5 \times 10^6$, wie beispielsweise Irgamod ® von Ciba Geigy, die rheologischen Eigenschaften verbessern und den Fertigteilen Verbesserungen der mechanischen Eigenschaften im thermoplastischen Zustand bringen, wirken sich solche Zusätze bei der thermoplastischen Verarbeitung von Schlagzähmodifier-haltigen PVC-Mischungen, wie z.B. PVC-ABS-Mischungen, wegen unkontrollierbarer Wirkung mit hoher Ausschußquote negativ aus. Verschiedene solcher PMMA-Typen mit $\overline{M}w$ > 50 000 g/mol und solche Polymere mit funktionellen Gruppen - oder handelsübliche Polymerweichmacher auf PVA-PE (70/30)-Basis und einem Molekulargewicht von 375 000 g/mol, wonach die Spritzgußteile durch die hohen Weichmacheranteile Klebneigung und Belagsbildung zeigten - konnten die rheologischen Eigenschaften der Polymermischungen bei ihrer thermoplastischen Verarbeitung, z.B. beim Spritzgießen, nicht verbessern bzw. zeigten die Formteile andere Nachteile. Erst der Zusatz sehr niedrig molekularer $C_1$-$C_8$-Alkylmethacrylat-Copolymerer führte zur überraschenden Losung des Problems. Der Stand der Technik legte die Erfindung wie sie oben angegeben ist, und wodurch homogen erscheinende Spritzgußteile erhalten werden, deren Wärmeformbeständigkeit und vor allem ihr Schlagzähigkeitsniveau durch den erfindungsgemäßen Zusatz nicht abgesenkt sind, nicht nahe.

Durchführung der Erfindung

Das erfindungsgemäße Verfahren zur maschinellen Herstellung unverträglicher, vor allem schlagzähmodifizierter PVC-Blends, wird mit PVC-Typen verschiedener Herstellungsverfahren, wie Suspensions-, Emulsions- oder Substanz-PVC durchgeführt. Zur guten Durchmischung des PVC mit dem zu blendenden Polymeren und den Verarbeitungshilfsmitteln wird das PVC vorzugsweise in Pulverform oder in Kornform von 1 bis 2 mm Korngröße angewendet. Vorteilhaft ist die Verwendung von aus der Emulsionspolymerisation stammendem, sprühgetrocknetem Produkt.

Für die Herstellung der technisch interessanten schlagzähmodifizierten PVC-Polymer-Mischungen haben insbesondere ABS-Polymerisate Bedeutung, die nach verschiedenen Verfahren hergestellt werden können (s. Ullmanns Encyklopädie der technischen Chemie, 4. Auflage, Band 19, S. 277 bis 287), und die wie die PVC-Komponente in feinteiliger Form zur Herstellung der maschinell zu verarbeitenden Mischungen verwendet werden.

PVC und ABS-Polymerisat werden im Gewichtsverhältnis 70 : 30 bis 30 : 70, vorzugsweise im Gewichtsverhältnis 60 : 40 bis 40 : 60 und vor allem im Gewichtsverhältnis von etwa 50 : 50 für die Herstellung der schlagzähmodifizierten Formteile nach der Erfindung verwendet.

Der erfindungsgemäße, niedrigmolekulare $C_1$-$C_8$-Alkylmethacrylat-Copolymerzusatz erfüllt auf Grund verschiedener Prüfungen und den dabei erhaltenen Ergebnissen bei der Verarbeitung der feinteiligen Mischungen die Funktion eines Fließverbesserers. Zur Herstellung des relativ niedrigmolekularen Polyalkylmethacrylats mit Molekulargewichten im Bereich von 2 000 bis 20 000 g/mol werden Methacrylsäurealkylester mit 1 bis 8 C-Atomen im Alkylrest, gegebenenfalls auch in Gegenwart weiterer Monomerer, vor allem von Acrylsäurealkylestern mit 1 bis 8 C-Atomen im Alkylrest, wobei Methacrylsäuremethylester mit mindestens 50 Gew.-% als Hauptmonomeres eingesetzt wird, nach bekannten Methoden polymerisiert (Rauch-Puntigam, Völker, Acryl- und Methacrylverbindungen, Springer-Verlag Berlin, Heidelberg, New York, 1967). Die Polymerisation kann als Substanz-, Suspensions- oder Emulsionspolymerisation durchgeführt werden. Vorteilhaft werden die erfindungemäßen Zusatzmittel durch Emulsionspolymerisation hergestellt und durch Sprühtrocknung aus der Emulsion gewonnen. Dabei fallen sie in der zur Vermischung geeigneten Teilchengröße an. Polymerisate aus der Substanz - und Suspensionspolymerisation müssen mechanisch noch zur optimal geeigneten Zusatzform zerkleinert werden.

Die Einstellung des Polymerisationsgrades und damit des mitentscheidenden Molekulargewichtes des Verarbeitungshilsmittels nach vorliegender Erfindung läßt sich nach bekannten Methoden (s. Rauch Puntigam, Völker loc.cit) wie z.B. durch das Verhältnis von Initiatoren zu Monomeren oder durch Zusatz von Reglern als Kettenübertragungsmittel erreichen. Als bekannte Kettenübertragungsmittel werden beispielsweise aliphatische Chlorkohlenwasserstoffe oder vorteilhaft aliphatische Merkaptane verwendet.

Brauchbare Mercaptane sind beispielsweise n-Butylmercaptan, n-Dodecylmercaptan, tert.-Dodecylmercaptan, Thioglykolsäure-2-ethylhexylester. Mit Molekulargewichten Mw von 2 000 bis 20 000 g/mol - ermittelt durch Gel-Permeations-Chromatographie - weisen die erfindungsgemäßen Verarbeitungshilfsmittel Lösungsviskositäten ($n_{sp/c}$) im Bereich von 3 bis 20 ml/g insbesondere im Bereich 5 bis 10 ml/g, gemessen nach DIN 51 562 in Chloroform als Lösungsmittel, auf. Hochpolymere PVC-Additive auf Polymethacrylat-Basis nach dem Stand der Technik dagegen besitzen Lösungsviskositäten ($n_{sp/c}$) in Chloroform von 50 bis 500 ml/g, das entspricht Molekulargewichten Mw von $1,2 \times 10^5$ bis $2,5 \times 10^6$ g/mol. Sie bewirken, wie ausgeführt, nicht den erfindungsgemäßen Effekt.

Die erfindungsgemäßen Alkylmethacrylat-Copolymer-Zusätze sind aus 50 bis 100 Gew.-% Methacrylsäurealkylester mit 1 bis 8 C-Atomen im Alkylrest als Monomeren aufgebaut, wobei mindestens 50 Gew.-% bis 98 Gew.-% Methylmethacrylat im Polymer eingebaut sind. Neben den 2 bis 50 Gew.-% Methacrylsäurealkylestern mit 2 bis 8 C-Atomen im Alkylrest können auch 0 bis 48 Gew.-% Acrylsäurealkylester mit 1 bis 8 C-Atomen im Alkylrest, wie beispielsweise Acrylsäuremethylester, Acrylsäureethylester, Acrylsäure-n-butylester, in dem erfindungsgemäßen Fließverbesserer eingebaut sein.

Neben Methacrylsäuremethylester werden danach als Methacrylsäure-$C_2$-$C_8$-alkylester beispielsweise Methacrylsäureethylester, Methacrylsäure-n-propylester, Methacrylsäure-n-butylester, Methacrylsäure-i-butylester, Methacrylsäure-n-hexylester, Methacrylsäure-2-ethylhexylester bei der Herstellung der Alkylmethacrylat-Copolymerisate, die mindestens mit 50 Gew.-% aus Methylmethacrylat als Monomerem aufgebaut sind, als Comonomere mitverwendet.

In Mengen von 0 bis 48 Gew.-%, insbesondere von 0 bis 20 Gew.-% können diese Polymerisate auch mit weiteren Monomeren, wie z.B. Styrol oder Acrylnitril u.a., aufgebaut sein.

Als vorteilhaft nach der Erfindung wirkende Fließverbesserer haben sich Copolymerisate im erfindungsgemäßen Molekulargewichtsbereich erwiesen, die aus 60 bis 95 Gew.-% Methylmethacrylat und 40 bis 5 Gew.-% n-Butylmethacrylat als Monomeren aufgebaut sind.

Beispiele für die als Fließverbesserer nach der Erfindung wirkenden Polymeren sind danach solche aus Monomergemischen von 80 Gew.-% Methylmethacrylat und 20 Gew..-% n-Butylmethacrylat oder aus 90 Gew.-% Methylmethacrylat und 10 Gew.-% n-Butylmethacrylat aufgebauten Polymerisaten mit Molekulargewichten $\overline{M}w$ von 5 000 bis 7 000 g/mol, ermittelt nach der Methode der Gel-Permeations-Chromatographie (Chemie Labor Betrieb 31 (1980) 232 - 236).

Das polymere Verarbeitungshilfsmittel der vorliegenden Erfindung wird in einer Menge von 0,1 bis 10 Gewichtsteilen, vorzugsweise in einer Menge von 0,5 bis 8 Gewichtsteilen, vor allem in einer Menge von 1 bis 5 Gewichtsteilen je 100 Gewichtsteilen dem maschinell, z.B. durch Spritzgießen, zu verarbeitenden Polymergemisch zugesetzt.

Den zu verarbeitenden Vinylchloridpolymerisat-Massen nach vorliegender Erindung können gegebenenfalls weitere Zusatzstoffe, wie Stabilisatoren, Antioxidantien, Pigmente, Gleitmittel, Farbstoffe, zugesetzt werden. Zusätze dieser Art sind aus den angegebenen Zusammensetzungen der Beispiele ersichtlich.

Bewertungsmethoden des erfindungsgemäßen Verfahren (Kunststoff-Handbuch 2/1, loc.cit, Seiten 590 bis 594).

Zur Beurteilung des Fließverhaltens erfindungsgemäß plastifizierter Formmassen wurden Messungen im Hochdruck-Kapillar-Viskosimeter durchgeführt. Dabei werden bei konstanter Temperatur und vorgegebenem Druck, z.B. bei 180 Grad C und 5 kp, in den Beispielen als 180/5 angegeben, die Schmelzviskosität $\eta_s$ der Mischung mit der Dimension [Pa•s], deren Fließzeit FZ in Sekunden, [s], und die Strangaufweitung B in %, [%] bestimmt. An diesem Gerät wurde weiter noch der Schmelzindex, MFI, mit der Dimension [g/10 min), gemessen.

Zur praxisnahen, anwendungstechnischen Beurteilung wurde aus der zu prüfenden Masse bei konstanten Maschinenparametern eine Fließspirale spritzgegossen und die Spirallänge X in [cm] bestimmt und die Fließwegverlängerung in [%] gegenüber der Masse ohne den erindungsgemäßen Rheologieverbesserer errechnet.

Der erfindungsgemäße Zusatz von beispielsweise 3 Teilen erfindungsgemäßen Polymethacrylats zu 100 Teilen PVC-ABS-Mischung bewirkt eine Zunahme der Fließspirallänge bis zu ca. 20 % gegenüber dem nicht erfindungsgemäß modifizierten Verfahren.

Die Untersuchungsergebnisse sind aus der Tabelle im experimentellen Teil ersichtlich.

Experimenteller Teil

BEISPIELE

A. Herstellung der erfindungsgemäßen Zusatzstoffe

1. Methylmethacrylat-n-Butylmethacrylat 80/20-Copolymer

In einem 7 1-Reaktionsgefäß, ausgerüstet mit Rückflußkühler, Rührwerk und Zulaufgefäß werden 0,9 g $C_{15}$-Paraffinsulfonat-Na-Salz, 11,1 g Natriumpersulfat in 1 200 g entsalztem Wasser bei 20 Grad C gelöst. Zu dieser Lösung wird bei 80 Grad C unter Rühren eine Emulsion aus folgenden Komponenten zudosiert:
2 400 g Methylmethacrylat
600 g Butylmethacrylat
210 g 2-Ethylhexylthioglycolat
27 g $C_{15}$-Paraffinsulfonat-Na-Salz
2 053 g entsalztes Wasser
Die Dosierdauer beträgt 4 Stunden. Nach Zulaufende wird der Ansatz auf Raumtemperatur abgekühlt. Hierbei erfolgt bei 70 Grad C die Zugabe von 2,3 g 1,4 Diisopropylbenzolmonohydroperoxid und 1,8 g Natriumhydroxymethylsulfinat.
Die Dispersion wird anschließend filtriert. Der pH-Wert der 50 %igen Dispersion beträgt 2,0, der Teilchendurchmesser ca. 190 nm.
Schwefelgehalt des getrockneten Polymerisats: 1,0 %

2. Methylmethacrylat-n-Butylmethacrylat 90/10-Copolymer

Man verfährt analog Al, vewendet jedoch im Zulauf 2 700 g Methylmethacrylat und 300 g Butylmethacrylat. Der pH-Wert der 50 %igen Dispersion beträgt 2,0, der Teilchendurchmesser ca. 240 nm.
Schwefelgehalt des getrockneten Polymerisats: 1,02 %

Gewinnung der Feststoffe:

Die Gewinnung der Feststoffe aus der Dispersion erfolgt durch Sprühtrocknung.
Die reduzierten Viskositäten $\eta$ spez/c, gemessen in Chloroform als Lösungsmittel, betragen für
Polymer A1 : 8 ml/g und
Polymer A2 : 8,5 ml/g
und die $\overline{M}$w-Werte entsprechend:
$\overline{M}$w = 5 870 g/mol und
$\overline{M}$w = 5 930 g/mol.

B. Verarbeitung von PVC-ABS-Mischungen durch Spritzgießen

Zur Vorbereitung der maschinellen Verarbeitung werden die Polymerkomponenten PVC und ABS als Handelswaren zusammen mit handelsüblichen PVC-Additiven, wie Pigmenten, Gleitmitteln und Stabilisatoren sowie mit den erfindungsgemäßen niedermolekularen Polymethacrylaten vermischt. Das so erhaltene Gemisch (Dry Blend) kann als solches auf der Spritzgußmaschine direkt weiter verarbeitet werden oder es kann vor dem Spritzgießen noch granuliert werden.

In der Tabelle 1 sind Rezepturzusammensetzungen und die Ergebnisse angegeben, die mit solchen Mischungen bei Messungen im Hochdruck-Kapillar-Viskosimeter (s. Fließeigenschaften) und beim Spritzgießen (Fließspirale) erhalten wurden, wobei zum Vergleich aus Verarbeitungen mit Mischungen ohne den erfindungsgemäßen Zusatz angegeben sind: Versuche 1, 6 und 11.

| Versuch Nr. | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Produkte | | Teile | Teile | Teile | Teile | Teil | Teile | Teile | Teile | Teile | Teile | Teile | Teile | Teile | Teile | Teile |
| PVC: SOLVIC® 250 SA | | 50 | 50 | 50 | 50 | 50 | 50 | 50 | 50 | 50 | 50 | 50 | 50 | 50 | 50 | 50 |
| ABS: Blendex® 703 | | 50 | 50 | 50 | 50 | 50 | 50 | 50 | 50 | 50 | 50 | 50 | 50 | 50 | 50 | 50 |
| Kronos® CL 220 (Pigment) | | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 |
| Loxiol® (Gleitmittel) | | 4,0 | 4,0 | 4,0 | 4,0 | 4,0 | 4,0 | 4,0 | 4,0 | 4,0 | 4,0 | 4,0 | 4,0 | 4,0 | 4,0 | 4,0 |
| Loxiol® G70S (Gleitmittel) | | 0,8 | 0,8 | 0,8 | 0,8 | 0,8 | 0,8 | 0,8 | 0,8 | 0,8 | 0,8 | 0,8 | 0,8 | 0,8 | 0,8 | 0,8 |
| Irgastab® T 22 M | | --- | --- | --- | --- | --- | 2,0 | 2,0 | 2,0 | 2,0 | 2,0 | --- | --- | --- | --- | --- |
| Irgastab® | | 2,0 | 2,0 | 2,0 | 2,0 | 2,0 | --- | --- | --- | --- | --- | --- | --- | --- | --- | --- |
| Irgastab® | | --- | --- | --- | --- | --- | --- | --- | --- | --- | --- | 1,5 | 1,5 | 1,5 | 1,5 | 1,5 |
| Rheologieverbesserer auf PMMA Basis nach A1 | | --- | 3,0 | 5,0 | --- | --- | --- | 3,0 | 5,0 | --- | --- | --- | 3,0 | 5,0 | --- | --- |
| nach A2 | | --- | --- | --- | 3,0 | 5,0 | --- | --- | --- | 3,0 | 5,0 | --- | --- | --- | 3,0 | 5,0 |
| **Ergebnisse:** | | | | | | | | | | | | | | | | |
| **Fließeigenschaften:** | | | | | | | | | | | | | | | | |
| MFI 190/5 (g/10 Min.) | | 2,93 | 2,94 | 2,54 | 2,89 | 3,37 | 2,70 | 3,08 | 3,94 | 3,30 | 3,76 | 2,17 | 2,95 | 3,34 | 2,79 | 3,08 |
| $\eta_s$ (Pa·s) | | 4915 | 4754 | 3983 | 4240 | 4112 | 3823 | 3328 | 3161 | 3122 | 2801 | 5493 | 4337 | 4015 | 4433 | 4176 |
| FZ 180/5 (s) | | 145 | 140 | 118 | 125 | 121 | 113 | 98 | 93 | 92 | 83 | 162 | 128 | 118 | 131 | 123 |
| B (%) | | 39 | 44 | 48 | 44 | 47 | 42 | 46 | 47 | 43 | 47 | 37 | 40 | 43 | 40 | 42 |
| Fließspiralenlänge $\bar{x}$ (cm) bei konstanten Masch. param. | | 58 | 68 | 70 | 70 | 70 | 62 | 72 | 73 | 66 | 69 | 54 | 61 | 64 | 58 | 62 |
| Fließwegverlängerung (%) gegenüber "0"-Ansatz | | | 17 | 21 | 21 | 21 | | 16 | 18 | 6 | 11 | | 13 | 19 | 7 | 15 |

## Patentansprüche

1. Verfahren zur maschinellen Verarbeitung von PVC-haltigen unverträglichen Polymermischungen zu Kunststoffblend-Artikeln,

6

dadurch gekennzeichnet,
daß den Polymermischungen Alkylmethacrylat-Copolymere mit Molekulargewichten $\overline{M}w$ in g/mol im Bereich von 2 000 bis ≤ 20 000 zugesetzt sind.

2. Verfahren nach Anspruch 1, dadurch gekennzeichnet, daß die Polymermischungen PVC-ABS-Mischungen sind, die PVC und ABS im Gewichtsverhältnis von 70 : 30 bis 30 : 70 enthalten, und denen das Alkylmethacrylat-Copolymere in einer Menge von 0,1 bis 10 Gewichtsteilen bezogen auf 100 Gewichtsteile Polymermischung zugesetzt ist.

3. Verfahren nach den Ansprüchen 1 und 2, dadurch gekennzeichnet, daß die Alkylmethacrylat-Copolymeren aus 50 bis 100 Gew.-% Methacrylsäurealkylestern mit 1 bis 8 C-Atomen im Alkylrest als Monomeren aufgebaut sind.

4. Verfahren nach den Ansprüchen 1 bis 3, dadurch gekennzeichnet, daß die Alkylmethacrylat-Copolymeren aus 50 bis 98 Gew.-% Methylmethacrylat als Monomerem aufgebaut sind.

5. Verfahren nach den Ansprüchen 1 bis 4, dadurch gekennzeichnet, daß die Alkylmethacrylat-Copolymeren aus 60 bis 95 Gew.-% Methylmethacrylat und 40 - 5 Gew.-% n-Butylmethacrylat als Monomeren aufgebaut sind.

6. Verfahren nach den Ansprüchen 1 bis 4, dadurch gekennzeichnet, daß die Alkylmethacrylat-Copolymeren aus mindestens 50 Gew.-% Methylmethacrylat, 2 bis 50 Gew.-% Methacrylsäurealkylestern mit 2 bis 8 C-Atomen im Alkylrest, 0 bis 48 Gew.-% Acrylsäurealkylestern mit 1 bis 8 C-Atomen im Alkylrest als Monomeren und gegebenenfalls 0 bis 48 Gew.-% weiterer Monomerer aufgebaut sind.

**Claims**

1. A method for the machine processing of PVC-containing incompatible polymer mixtures to produce plastic blend articles, characterised in that alkyl methacrylate copolymers with molecular weights $\overline{M}w$ in g/mol ranging from 2,000 to ≤ 20,000 are added to the polymer mixtures.

2. A method according to claim 1, characterised in that the polymer mixtures are PVC-ABS mixtures which contain PVC and ABS in a weight ratio of 70 : 30 to 30 : 70 and to which the alkyl methacrylate copolymer has been added in an amount of 0.1 to 10 parts by weight, based on 100 parts by weight of polymer mixture.

3. A method according to claims 1 and 2, characterised in that the alkyl methacrylate copolymers are synthesised from 50 to 100 wt.% of methacrylic acid alkyl esters having 1 to 8 carbon atoms in the alkyl group as monomers.

4. A method according to claims 1 to 3, characterised in that the alkyl methacrylate copolymers are synthesised from 50 to 98 wt.% of methyl methacrylate as a monomer.

5. A method according to claims 1 to 4, characterised in that the alkyl methacrylate copolymers are synthesised from 60 to 95 wt.% of methyl methacrylate and 40 - 5 wt.% of n-butyl methacrylate as monomers.

6. A method according to claims 1 to 4, characterised in that the alkyl methacrylate copolymers are synthesised from at least 50 wt.% of methyl methacrylate, 2 to 50 wt.% of methacrylic acid alkyl esters having 2 to 8 carbon atoms in the alkyl group, 0 to 48 wt.% of acrylic acid alkyl esters having 1 to 8 carbon atoms in the alkyl group as monomers and, optionally, from 0 to 48 wt.% of further monomers.

**Revendications**

1. Procédé de transformation à la machine de mélanges de polymères incompatibles contenant du PVC pour la fabrication d'articles en matière plastique composite,
caractérisé en ce que l'on ajoute, aux mélanges de polymères, des copolymères de méthacrylates d'alkyle ayant des poids moléculaires $\overline{M}w$, en g/mole, dans la gamme de 2000 à ≤ 20 000.

2. Procédé selon la revendication 1, caractérisé en ce que les mélanges de polymères sont des mélanges de PVC-ABS qui contiennent le PVC et l'ABS dans un rapport pondéral de 70:30 à 30:70 et auxquels le copolymère de méthacrylates d'alkyle est ajouté dans une proportion de 0,1 à 10 parties en poids pour 100 parties en poids de mélange de polymères.

3. Procédé selon la revendication 1 ou 2, caractérisé en ce que les copolymères de méthacrylates d'alkyle sont composés, en tant que monomères, de 50 à 100% en poids d'esters alkyliques d'acide méthacrylique à 1-8 atomes de carbone dans le reste alkyle.

4. Procédé selon l'une quelconque des revendications 1 à 3, caractérisé en ce que les copolymères de méthacrylates d'alkyle sont composés, en tant que monomère, de 50 à 98% en poids de méthacrylate de méthyle.

5. Procédé selon l'une quelconque des revendications 1 à 4, caractérisé en ce que les copolymères de méthacrylates d'alkyle sont composés, en tant que monomères, de 60 à 95% en poids de méthacrylate de méthyle et de 40 à 5% en poids de méthacrylate de n-butyle.

6. Procédé selon l'une quelconque des revendications 1 à 4, caractérisé en ce que les copolymères de méthacrylates d'alkyle sont composés, en tant que monomères, d'au moins 50% en poids de méthacrylate de méthyle, de 2 à 50% en poids d'esters alkyliques d'acide méthacrylique à 2-8 atomes de carbone dans le reste alkyle, de 0 à 48% en poids d'esters alkyliques d'acide acrylique à 1-8 atomes de carbone dans le reste alkyle et éventuellement de 0 à 48% en poids d'autres monomères.